Europäisches Patentamt

European Patent Office

Office européen des brevets

(19)

(11) Numéro de publication : **0 037 339**
**B1**

# FASCICULE DE BREVET EUROPÉEN

(12)

(45) Date de publication du fascicule du brevet :
25.07.84

(51) Int. Cl.³ : **H 02 G 15/068**

(21) Numéro de dépôt : **81400500.5**

(22) Date de dépôt : **27.03.81**

(54) Electrodes de réduction de contraintes électriques pour matériel de raccordement de câbles d'énergie sous écran.

(30) Priorité : **02.04.80 FR 8007487**

(43) Date de publication de la demande :
**07.10.81 Bulletin 81/40**

(45) Mention de la délivrance du brevet :
**25.07.84 Bulletin 84/30**

(84) Etats contractants désignés :
**CH DE GB IT LI SE**

(56) Documents cités :
**FR-A- 2 134 236**
**FR-A- 2 307 351**
**FR-A- 2 423 036**
**US-A- 2 835 725**

(73) Titulaire : **SOCIETE INDUSTRIELLE DE LIAISONS
ELECTRIQUES - SILEC**
**64bis, rue de Monceau**
**F-75008 Paris (FR)**

(72) Inventeur : **Chazelas, Elie**
**Saint-Germain Laval**
**F-77130 Montereau (FR)**

(74) Mandataire : **Debay, Yves et al**
**NOVAPAT-CABINET CHEREAU 107, boulevard
Péreire**
**F-75017 Paris (FR)**

# 0 037 339

**Description**

La présente invention concerne les matériels de raccordement d'installations électriques de transport d'énergie, et plus particulièrement les électrodes de réduction de contraintes électriques pour les zones de jonction où sont provoquées des discontinuités des éléments principaux, notamment les câbles électriques.

On sait que, dans les installations électriques de transport d'énergie, par exemple les câbles à moyenne ou haute tension, il existe, au niveau des jonctions de ces câbles, soit par exemple pour des épissures, pour des dérivations ou pour le raccordement avec des cellules ou transformateurs, une discontinuité dans le champ électrique au niveau de la zone de terminaison du blindage. Lorsque la discontinuité ou gradient de potentiel électrique dépasse une valeur prédéterminée le long de la surface de l'isolant du conducteur électrique entourée par un gaz, notamment de l'air, il peut se créer des décharges gazeuses produisant de l'ozone et d'autres gaz engendrant une altération du système d'isolation électrique. Pour y remédier il est connu d'utiliser, au niveau de l'arrêt des écrans des câbles, des cônes déflecteurs avec ou sans condensateurs qui présentent toutefois des dimensions très importantes, notamment en haute tension, par rapport aux terminaisons des câbles. Ces cônes déflecteurs doivent être logés dans des isolateurs en porcelaine remplis de matière isolante, avec les inconvénients afférents concernant les soins tout particuliers requis pour l'installation de ces dispositifs au moment de la réalisation sur chantier.

Il est connu également d'utiliser des produits à résistance non linéaire, des produits à haute permittivité et des produits à résistance calibrée à base de noir de carbone. Le brevet français FR-A-2 423 036 au nom de la demanderesse décrit ainsi l'utilisation d'un mastic, contenant des particules de carbure de silicium la granulométrie constante, disposé au niveau de l'arrêt d'écran sur la surface de l'isolant du conducteur suivant la distance requise pour éviter les effluves électriques et obtenir les caractéristiques électriques souhaitées.

Le document U.S. 2 835 725 révèle également l'utilisation d'une électrode de réduction de contrainte électrique, comprenant au moins deux zones successives contiguës l'une à l'autre dans le sens axial du conducteur pour présenter chacune une résistance électrique différente de celle de la zone voisine.

Tous ces produits sont pourtant limités en performances électriques par échauffement en surtension et ne permettent pas d'envisager de les utiliser en haute tension ni surtout en très haute tension pour réaliser des électrodes de réduction de contrainte efficaces.

D'autre part, dans les extrémités des câbles isolés pour le transport de l'énergie, le remplacement des isolateurs en verre, en porcelaine ou en résine époxydée par des ensembles préfabriqués en usine à l'aide de caoutchoucs synthétiques a permis de réduire les difficultés de mise en œuvre sur chantier, mais les performances électriques de ces nouveaux matériels de raccordement demeurent également limitées. Il en est de même pour les jonctions et dérivations, où les boîtes moulées en fonte ont été remplacées par des ensembles rubannés ou coulés de résine à froid puis par des procédés préfabriqués en usine.

La présente invention a précisément pour objet de proposer une structure d'électrode de réduction de contraintes électriques présentant des caractéristiques électriques remarquables pour les moyenne et haute tension permettant des accessoires préfabriqués en usine et permettant une répartition parfaitement linéaire de la tension électrique le long des parties apparentes de l'isolant d'un conducteur électrique de transport d'énergie.

Pour ce faire, selon une première caractéristique de la présente invention, l'électrode de réduction de contraintes électriques pour extrémités de jonction de conducteur électrique blindé, destinée à être disposée autour de la périphérie de l'isolant du conducteur au niveau de l'arrêt d'écran du conducteur blindé, et comprenant au moins un élément de gainage comprenant au moins deux zones successives contiguës l'une à l'autre dans le sens axial du conducteur, caractérisée en ce que chacune de ces zones est constituée d'un mélange support en matériau plastique chargé de particules de produits actifs à résistance électrique non linéaire et en ce que ces particules ont une granulation différente d'une zone à l'autre.

Selon une autre caractéristique de la présente invention l'électrode de réduction de contraintes électriques pour extrémités de jonction de conducteur électrique blindé, destinée à être disposée autour de la périphérie de l'isolant du conducteur au niveau de l'arrêt d'écran du conducteur blindé, et comprenant au moins un élément de gainage comprenant au moins deux zones successives contiguës l'une à l'autre dans le sens axial du conducteur, caractérisée en ce que chacune des zones est constituée d'un mélange support en matériau plastique chargé de particules de produits actifs à résistance électrique non linéaire, en ce que les particules ont une granulation moyenne sensiblement constante et en ce que la concentration des particules est différente d'une zone à l'autre.

D'autres caractéristiques et avantages de la présente invention ressortiront de la description suivante de modes de réalisation donnés à titre illustratif mais nullement limitatif, faite en relation avec les dessins annexés sur lesquels :

La figure 1 est un diagramme comparatif entre une électrode de contrainte incorporant des particules d'un matériau lui conférant une résistance électrique non linéaire uniformément réparties, et une électrode de contrainte selon la présente invention ;

2

La figure 2 représente un mode de réalisation d'une extrémité préfabriquée de câble isolé équipée d'une électrode de contrainte selon la présente invention ;

Les figures 3 à 7 représentent diverses variantes de réalisation d'électrodes de réduction de contrainte pour une extrémité préfabriquée de câble isolé analogue à celle représentée sur la figure 2 ;

Les figures 8 et 9 représentent deux variantes de réalisation de jonctions électriques monoblocs équipées d'électrodes de contrôle de contrainte selon la présente invention ;

La figure 10 représente schématiquement une jonction monobloc préfabriquée avec adapteur des diamètres des câbles équipée d'une électrode de contrôle des contraintes selon la présente invention ;

La figure 11 représente une dérivation simple ou double monobloc préfabriquée équipée d'électrodes de contrôle de contrainte selon la présente invention, enveloppant le principal et le dérivé ;

La figure 12 représente une tête d'extrémité embrochable avec adaptateur comprenant une électrode de contrôle de contrainte selon la présente invention ; et

La figure 13 représente un isolateur d'extrémité en porcelaine comportant une électrode de contrainte selon la présente invention.

Dans la description qui va suivre, les éléments analogues ou identiques des terminaisons ou des dispositifs de raccordement de câbles portent les mêmes chiffres de référence éventuellement indicés.

La présente invention sera explicitée en détail plus particulièrement en relation avec l'extrémité préfabriquée pour câble isolé haute tension (typiquement 63 kV) représentée sur la figure 2. Sur cette figure 2, l'extrémité de l'âme conductrice du câble est reliée à une cosse 2 assurant la connexion à la haute tension, cette âme conductrice étant disposée à l'intérieur d'une gaine isolante 3 elle-même normalement entourée par l'écran conducteur 4 du câble. C'est précisément au niveau de l'arrêt de cet écran conducteur 4 que se posent les problèmes de gradients de potentiel électrique le long de la surface rendue apparente de l'isolant 3 de l'âme conductrice. L'extrémité préfabriquée de câble comprend typiquement une série de jupes d'isolateur 5, par exemple moulées en EPDM réticulé, enfilées sur l'isolant 3 à la suite d'un manchon isolant 6, réalisé par exemple également en EPDM réticulé, ce manchon 6 se prolongeant au-delà de l'arrêt de l'écran 4 en étant fermé, au voisinage de la zone d'arrêt, par un adaptateur 7 réalisé en un élastomère conducteur assurant le contact avec l'écran conducteur 4 du câble.

Conformément à la présente invention, l'électrode de réduction de contraintes, désignée dans son ensemble par la référence 10, disposée entre le manchon 6 et l'isolant 3, comprend quatre zones jointives plaquées sur l'isolant 3, les zones A, B, C, D successives étant contiguës l'une à l'autre dans la direction axiale de l'électrode. L'électrode d'extrémité A est en contact soudé avec l'adaptateur 7. Les quatre zones A à D présentent chacune, pour une tension donnée, une résistance électrique non linéaire différente des résistances des zones adjacentes de façon que, de A à D, les résistances augmentent progressivement vers les parties côté haute tension de l'extrémité de câble. Typiquement, l'électrode de contrainte 10 est réalisée en noyant dans un matériau isolant des particules divisées d'un produit à résistance électrique non linéaire et variable en fonction de la tension appliquée V, de telle sorte que l'intensité I qui traverse l'élément d'électrode de contrôle obéisse à la relation $I = KV^Y$, K et Y étant des constantes et Y étant supérieur à 1. Conformément à la présente invention, les variations de résistance des éléments de l'électrode 10 sont obtenues en diminuant progressivement la densité des particules du matériau à résistance variable noyés dans le matériau isolant vers les parties éloignées des pièces conductrices, de sorte que cette variation de densité du produit divisé confère à l'élément d'électrode une résistance dégressive vers les parties à protéger, soit une résistance progressive vers les parties sous haute tension. Les variations de densité peuvent être obtenues en dosant progressivement les concentrations de particules à granulométrie constante du produit à résistance variable non linéaire, ou en variante, les variations de densité peuvent être obtenues avec une concentration constante mais une granulométrie variable et progressive du produit divisé à résistance électrique non linéaire en tenant compte du fait que l'effet du produit actif particulaire est d'autant plus grand que les grains sont plus gros pour un même volume de produit fini. Dans toute la description, il sera décrit des électrodes de contraintes constituées d'une suite bout à bout d'éléments individuels accolés les uns aux autres, mais on comprendra que les variations de résistance peuvent être obtenues en faisant varier continûment suivant la direction axiale la concentration de particules à granulométrie constante dans un support commun, les concentrations dans le liant du support pouvant varier de 30 à 70 %.

Dans le mode de réalisation représenté sur la figure 2, le liant ou mélange support pour les différents éléments d'électrode de contrainte peut être choisi parmi des matières plastiques telles que le polyéthylène, le PVC, les élastomères synthétiques réticulables ou thermoplastiques, par exemple EPDM, EPR, polyuréthane, polyester, les élastomères à plusieurs composants coulables et durcissant à froid ou à chaud, par exemple choisis parmi les silicones, les polyuréthanes, les polybutadiènes, les résines à plusieurs composants durcissant à froid ou à chaud, par exemple les polyesters, les polyuréthanes, les résines époxy ou les résines phénoliques. On peut également utiliser les mastics à base d'élastomères et de liquides décrits dans le brevet français FR-A-2 423 036, ainsi que les liquides isolants tels que les huiles naphténiques, aromatiques, ou paraffiniques, les huiles au silicone, ou encore les céramiques, les porcelaines, les terres réfractaires, les émaux, les verres, les ciments ou les plâtres, ou enfin des matières thermorétractables mises en place à l'aide d'une source de chaleur portative.

Les mélanges supports doivent être choisis pour pouvoir y incorporer de façon contrôlée, les produits actifs divisés à résistance électrique variable tels que le carbure de silicium, des oxydes métalliques tels que la silice naturelle ou précipitée, l'oxyde de titane, l'oxyde de zinc, la magnésie, l'alumine, l'amiante, ou le titanate de baryum. Typiquement, les éléments de l'électrode de contrainte seront obtenus en incorporant dans le mélange support de 30 à 85 % d'un mélange desdits produits actifs divisés. D'une façon générale, le produit actif est choisi pour chaque zone en fonction de la position de la zone et en fonction des tamis définissant une granulométrie moyenne. On peut utiliser un produit divisé depuis un tamis de 8 fils, correspondant à 2 380 microns de granulométrie moyenne, jusqu'au tamis de 1 200 fils correspondant à 3 microns de granulométrie moyenne. Dans les modes de réalisation réalisant les différentes zones avec des résistances électriques progressives obtenues en modulant la granulométrie des grains du produit actif, typiquement du carbure de silicium ou de l'oxyde de zinc, la grosseur des grains de carbure de silicium diminuera ainsi de la zone A vers la zone D, de façon à répartir d'une manière parfaitement linéaire les lignes d'équipotentielles, le choix de la granulométrie de départ pour la zone A étant fonction de la tension du câble.

A titre d'exemple non limitatif du mode de réalisation de la figure 2, on a fabriqué des extrémités de câbles isolés polyéthylène 20 kV, $1 \times 150$ mm$^2$ avec la zone A constituée d'un mastic du type évoqué plus haut chargé à 70 % de carbure de silicium tamis 90, la zone B constituée d'un mastic chargé de 70 % de carbure de silicium tamis 180, la zone C constituée d'un mastic chargé de 70 % de carbure de silicium tamis 280, et la zone D constituée d'un mastic chargé de 70 % de carbure de silicium tamis 500. Il est bien évident que le choix des granulométries n'est pas limité aux seules valeurs citées ci-dessus, les dimensions des zones actives (longueur, épaisseur) n'étant pas critiques mais étant déterminées en fonction de la place disponible, les épaisseurs croissant toutefois avec la tension de service et étant supérieures à 5/10$^e$ mm pour 20 kV et à 5/8$^e$ mm pour 200 kV. Des caractéristiques électriques améliorées seraient obtenues en faisant varier continûment la granulométrie du tamis le plus gros jusqu'au tamis le plus fin le long d'un mélange support continu. Dans un autre mode de réalisation pour la même extrémité du câble en jouant cette fois sur les concentrations d'une granulométrie choisie, les zones A à D sont obtenues en chargeant le mastic avec respectivement 70 %, 60 %, 50 % et 40 % de particules de carbure de silicium ayant une granulométrie moyenne de 37 $\mu$. Dans cet exemple particulier, chaque zone A à D a une longueur de 7 cm et une épaisseur de 3 cm, ce qui conduit à une électrode de contrôle des contraintes ayant 28 cm de long pour une longueur totale de l'extrémité de câble de 45 cm. Les résultats obtenus sont :

| | |
|---|---|
| Décharges partielles à la tension de service | < 1 pico coulomb |
| Onde de choc au 1/50 | 250 kV contournement |
| Tenue diélectrique | 1 h à 125 kV |
| Tension de contournement | 10 minutes à 135 kV |

soit 65 % de gain par rapport aux performances du matériel existant.

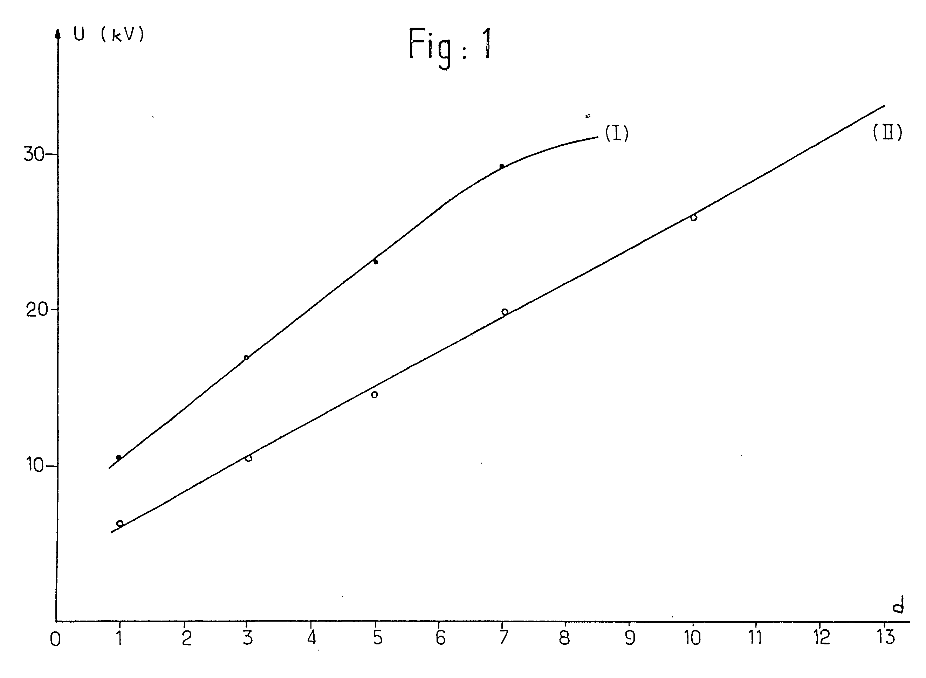

La figure 1 illustre par ailleurs, la parfaite linéarité de la répartition des lignes d'équipotentielles avec une telle électrode selon la présente invention (courbe II) par rapport à une électrode de contrôle des contraintes à granulométrie constante (courbe I) dont la linéarité de la répartition des lignes d'équipotentielles est nettement moins bonne. Les tensions U recueillies sur l'électrode figurant en ordonnées et la distance par rapport à l'arrêt de l'écran 4 figurant en abscisses.

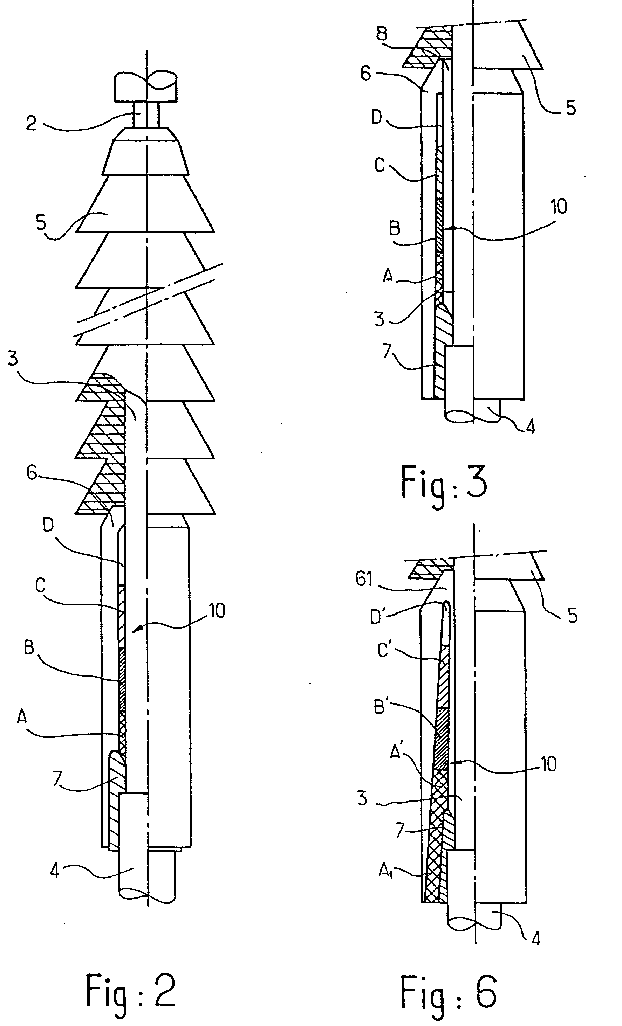

Le mode de réalisation de la figure 2, avec l'électrode de contrôle des contraintes plaquée contre l'isolant 3 du câble, convient particulièrement pour des câbles isolés à tension de service inférieure ou égale à 63 kV, ce qui donne à l'interface électrode-isolant un gradient de potentiel maximum $G_{max} < 4\,000$ V/mm. On a représenté sur la figure 3, un autre mode de réalisation correspondant à une extrémité de câble isolé pour tension de service de 90 kV avec interposition, entre l'électrode 10 et l'isolant 3, d'une couche sous-jacente isolante 8 d'épaisseur voisine de celle de l'électrode et ayant un pouvoir inducteur spécifique ou permittivité relative $\varepsilon$ supérieure ou égale à celui de l'isolant 3 du câble. Pour les hautes tensions, on peut prévoir plusieurs couches sous-jacentes 8 dont la permittivité $\varepsilon$ croît progressivement jusqu'à la valeur de $\varepsilon_1$ correspondant à la partie la plus conductrice (A) de l'électrode de contrôle des contraintes. Ces couches sous-jacentes éloignent l'électrode de contrôle des contraintes de l'âme conductrice du câble pour maintenir au niveau de l'électrode un gradient maximum toujours inférieur à 4 000 V/mm, comme susmentionné, en combinaison avec un cône déflecteur côté potentiel de l'écran. Les différentes zones de l'électrode 10 du mode de réalisation de la figure 3 sont réalisées en chargeant de carbure de silicium un mélange EPDM avec les valeurs suivantes, de A jusqu'à D : 60 % de particules de tamis 90, 60 % de tamis 180, 80 % de tamis 280 et 60 % de tamis 500. Les performances obtenues sont :

| | |
|---|---|
| Décharges partielles | < 1 pico coulomb à 80 kV |
| Ondes de choc au 1/50 | 525 kV contournement |
| Tenue diélectrique | 1 h à 200 kV |

Des dispositions homothétiques peuvent être adoptées pour des électrodes de contrôle de contrainte d'extrémité de câble à des tensions de 110 kV, 150 kV, 225 kV et au-delà. La couche sous-jacente 8 peut être en tout matériau adéquat, solide, gaz sous pression, tel que par exemple de l'azote, de l'hexafluorure de soufre, de l'huile ou une graisse isolante confinés.

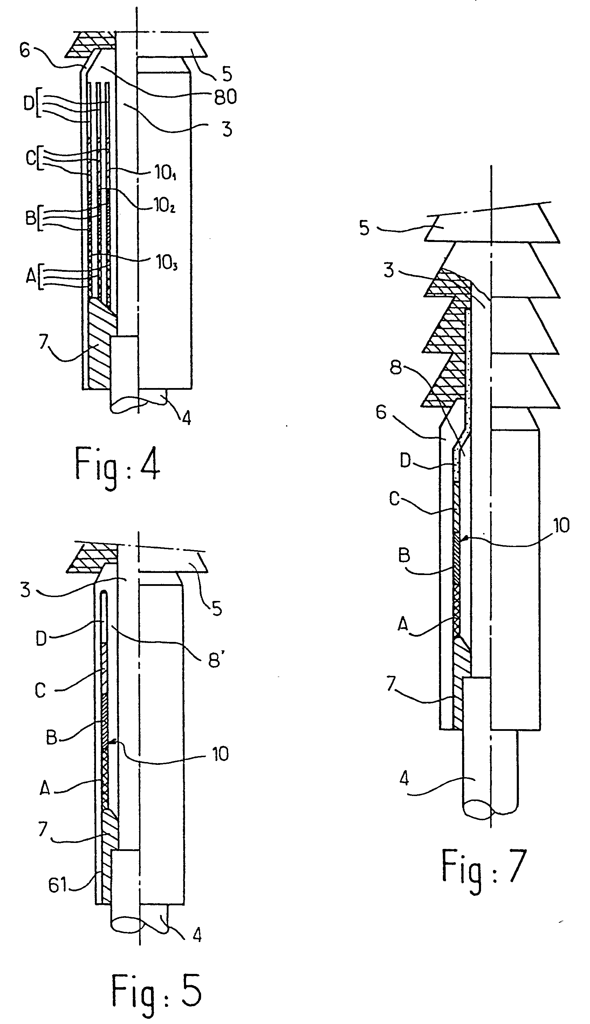

On a représenté sur la figure 4, un mode de réalisation comprenant trois électrodes de contraintes $10_1$, $10_2$ et $10_3$ identiques, chacune constituée de quatre zones successives A à D, espacées radialement les unes des autres et de l'isolant 3 par des sous-couches isolantes 80 présentant une permittivité relative $\varepsilon$ plus élevée que celle de l'isolant 3 du câble.

Dans le mode de réalisation de la figure 5, l'électrode 10 est noyée dans le manchon 61 qui comporte, outre sa partie périphérique habituelle, un prolongement tubulaire interne 8' assurant le rôle de la couche sous-jacente et remplissant les mêmes conditions que ci-dessus. Dans le mode de réalisation de la figure 6, analogue à celui de la figure 5, les zones A' à D' de l'électrode 10 ont une section transversale décroissante à partir de l'écran de câble 4, la zone d'extrémité A' comprenant un prolongement $A_1$ formant jupe recouvrant l'adaptateur 7.

Dans le mode de réalisation de la figure 7, analogue par ailleurs à celui de la figure 3, la dernière zone D de l'électrode 10 se prolonge au-delà de la couche sous-jacente 8, pour être ramenée plaquée contre l'isolant 3 du câble, en séparant ainsi l'extrémité supérieure du manchon 6 de cet isolant. Les dimensions et le nombre des zones de l'électrode 10 peuvent être ainsi modulés en fonction du nombre de jupes 5 de l'extrémité de câble préfabriquée.

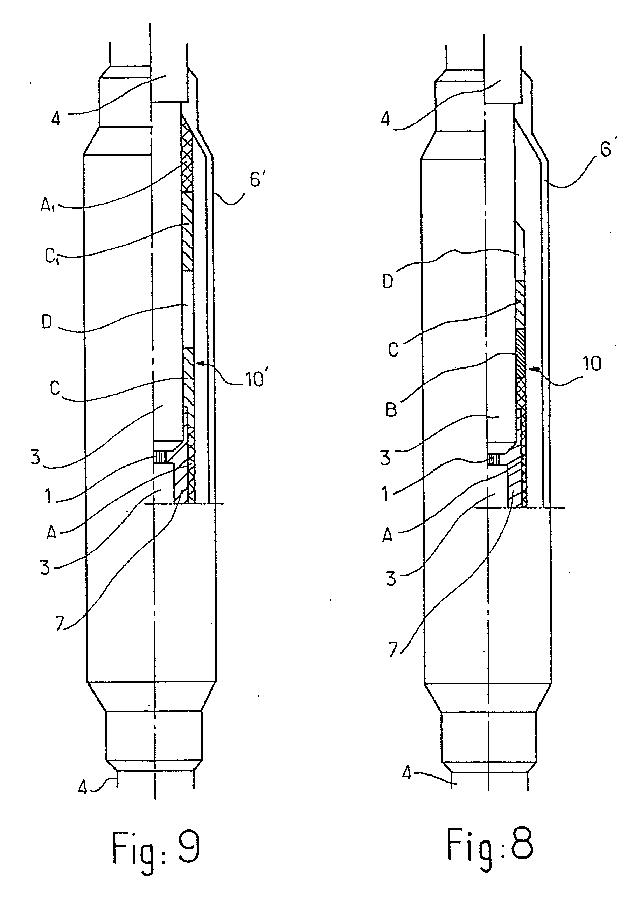

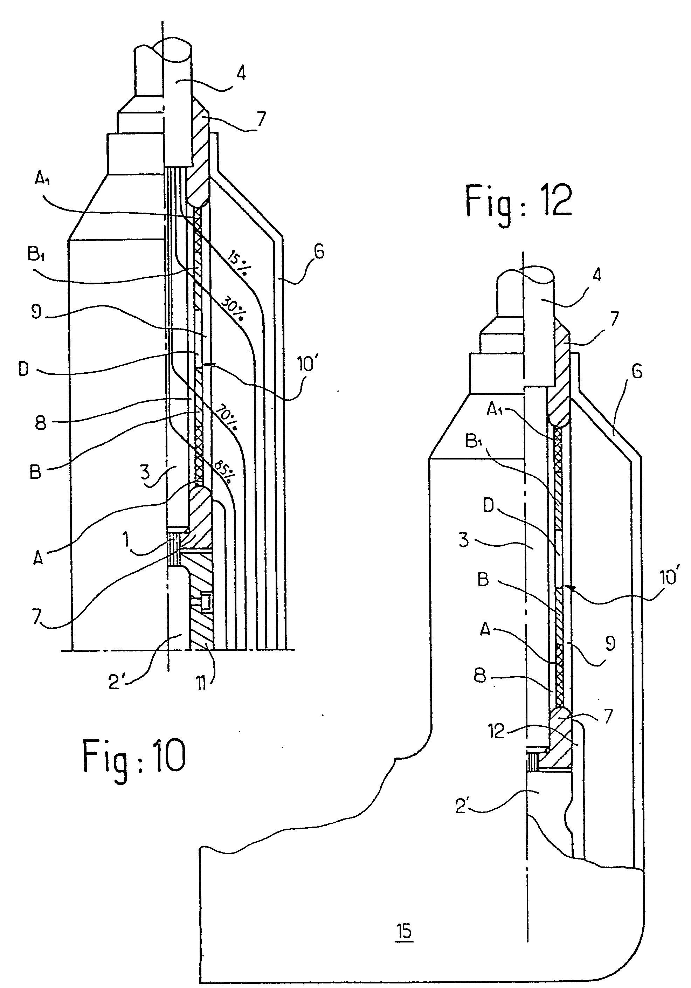

On a représenté sur les figures 8 et 9, deux modes de réalisation d'une jonction monobloc préfabriquée utilisant une électrode de réduction des contraintes selon la présente invention. Sur ces figures on retrouve le manchon isolant extérieur 6', se prolongeant cette fois pour venir en contact d'appui à ses deux extrémités sur les écrans 4 des deux extrémités de câble aboutées et réalisé également en un matériau plastique conducteur. Les zones A à D de l'électrode 10 sont cette fois organisées à partir de la zone de jonction où apparaît l'âme conductrice nue 1 des câbles, la zone d'extrémité D ne se prolongeant pas jusqu'au niveau des écrans 4 des extrémités de câble. Comme dans les modes de réalisation précédents, la zone médiane A, la plus chargée, est en contact (soudé) avec l'adaptateur 7 en mélange conducteur entourant l'âme conductrice 1. L'électrode se prolonge de façon symétrique vers l'autre écran de l'autre extrémité de câble. La figure 9 représente également une jonction monobloc préfabriquée mais avec électrode de contrainte 10' à zones en opposition d'activité. Dans ce mode de réalisation, la zone médiane A est uniquement en contact avec l'adaptateur 7, la zone B étant omise de façon à présenter, vers l'écran 4 de l'extrémité de câble, une succession des zones C, D puis $C_1$, symétrique et analogue à C, et $A_1$ analogue à A, cette dernière zone étant en contact, par l'intermédiaire du manchon 6', avec l'écran 4 de l'extrémité de câble.

On a représenté sur la figure 10, une jonction monobloc préfabriquée avec adaptateur des diamètres des câbles comportant, comme dans le mode de réalisation précédent, une électrode de contrôle des contraintes 10' dont les zones actives sont en opposition. L'électrode 10' est ici disposée avec interposition, entre elle et l'isolant 3 du câble, d'une couche sous-jacente 8 du type décrit plus haut, l'électrode étant elle-même recouverte d'un isolant 9 dont le pouvoir inducteur spécifique est également supérieur à celui de l'isolant 3 du câble. L'électrode 10' est symétrique par rapport à une zone médiane D à faible densité de carbure de silicium, les zones d'extrémités A et $A_1$ étant, comme dans les modes de réalisation des figures 1 à 7, en contact avec les adaptateurs 7 au niveau de l'écran 4 du câble et de l'âme conductrice 1 du câble reliée à un élément conducteur 2' maintenu dans un boîtier isolant 11. Un tracé des lignes d'équipotentielles sur cette figure 10 montre l'efficacité de l'électrode de contrôle de contrainte selon la présente invention.

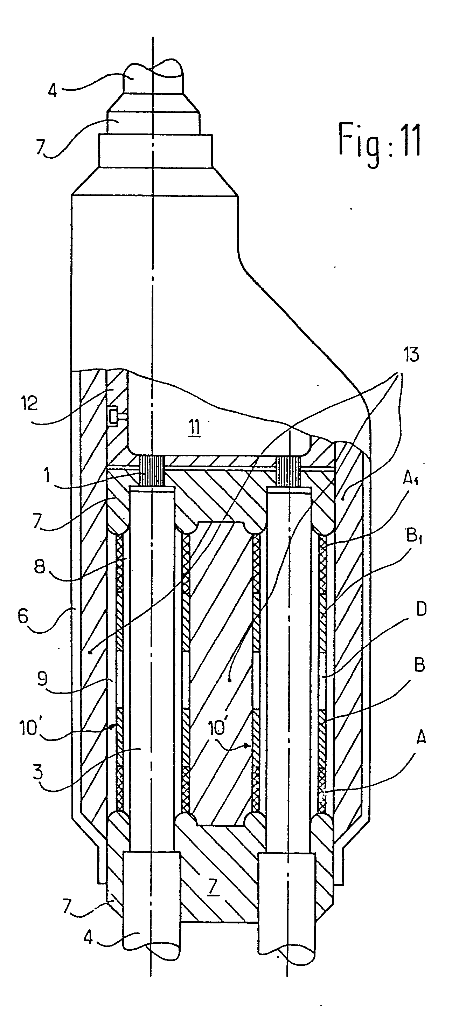

On a représenté sur la figure 11, une dérivation monobloc préfabriquée dans laquelle l'âme conductrice d'un premier câble identifiable par son écran 4, est reliée à un bloc connecteur 11, disposé dans un boîtier isolant 12, et duquel partent deux lignes, principale et dérivée, ayant leurs âmes conductrices 1 reliées au bloc connecteur 11, chaque ligne étant équipée d'une électrode de contrôle des contraintes 10' dont les zones actives sont en opposition suivant un agencement similaire pour chaque câble à celui décrit en relation avec la figure 10. On notera que, dans cette dérivation, les adaptateurs 7 sont communs aux deux lignes de sortie et qu'outre la sous-couche sous-jacente 8 et la gaine isolante 9 de part et d'autre des électrodes 10', un matériau isolant 13 remplit totalement le manchon-boîtier 6 de la dérivation.

On a représenté sur la figure 12, une tête d'extrémité embrochable, comprenant une partie coudée de connexion 15, et une partie d'adaptateur équipée d'une électrode de contrôle de contrainte 10', à zones actives en opposition tout à fait identiques à celles décrites en relation avec la figure 10.

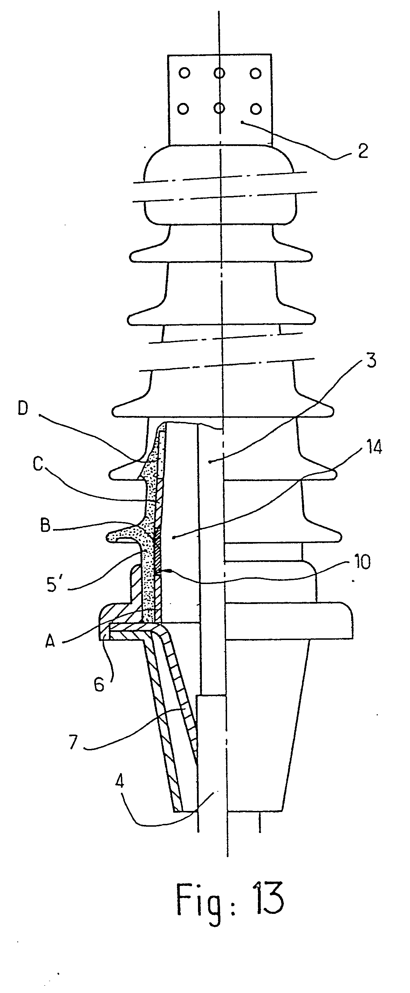

Quoique, comme susmentionné, l'électrode selon l'invention convienne tout particulièrement pour des équipements préfabriqués compacts utilisant des élastomères, elle peut être très avantageusement utilisée pour l'amélioration des performances des isolateurs classiques à porcelaine. On a ainsi représenté sur la figure 13, un isolateur d'extrémité de câble analogue à celui de la figure 3, mais avec un bloc de jupes 5' en porcelaine, l'électrode de contrôle de contrainte 10, similaire à celle des figures 2 à 6, étant montée sur la paroi intérieure du corps de jupe 5', à distance de l'isolant 3 du conducteur, l'espace défini entre ce dernier et le corps de jupe 5', clos par un adaptateur tronconique 7, étant rempli d'un milieu fluide isolant 14 constitué par un gaz sous pression par exemple de l'air ou de l'azote, une graisse ou une huile isolante.

Quoique la présente invention ait été décrite en relation avec des modes de réalisation particuliers, elle ne s'en trouve pas limitée mais est au contraire susceptible de modifications et de variantes qui apparaîtront à l'homme de l'art.

**Revendications**

1. Electrode de réduction de contraintes électriques pour extrémités de jonction de conducteur électrique blindé, destinée à être disposée autour de la périphérie de l'isolant du conducteur au niveau de l'arrêt d'écran du conducteur blindé, et comprenant au moins un élément de gainage comprenant au moins deux zones successives (A-D) contiguës l'une à l'autre dans le sens axial du conducteur (3, 4), caractérisée en ce que chacune de ces zones est constituée d'un mélange support en matériau plastique chargé de particules de produits actifs à résistance électrique non linéaire et en ce que ces particules ont une granulation différente d'une zone à l'autre.

2. Electrode de réduction de contraintes électriques pour extrémités de jonction de conducteur électrique blindé, destinée à être disposée autour de la périphérie de l'isolant du conducteur au niveau de l'arrêt d'écran du conducteur blindé, et comprenant au moins un élément de gainage comprenant au moins deux zones successives (A-D) contiguës l'une à l'autre dans le sens axial du conducteur (3, 4), caractérisée en ce que chacune des zones est constituée d'un mélange support en matériau plastique chargé de particules de produits actifs à résistance électrique non linéaire, en ce que les particules ont une granulation moyenne sensiblement constante et en ce que la concentration des particules est différente d'une zone à l'autre.

3. Electrode selon la revendication 1 ou la revendication 2, caractérisée en ce que les zones successives (A-D) ont une section transversale décroissant vers les parties sous haute tension de l'extrémité de jonction.

4. Electrode selon l'une quelconque des revendications 1 à 3, caractérisée en ce qu'un milieu isolant intermédiaire (8, 8', 14) ayant une permittivité relative ($\varepsilon$) plus élevée que celle de l'isolant (3) du conducteur est interposé entre ce dernier et l'électrode de contrôle de contrainte (10, 10').

5. Electrode selon l'une quelconque des revendications 1 à 4, caractérisée en ce qu'elle comprend au moins deux éléments de gainage ($10_1$, $10_2$, $10_3$), comportant chacun une succession de zones à résistances progressives (A à D), distants radialement les uns des autres et séparés par un milieu isolant (80) ayant une permittivité relative ($\varepsilon$) plus élevée que celle de l'isolant (3) du conducteur.

6. Electrode selon la revendication 1 ou la revendication 2, caractérisée en ce qu'elle comprend une première partie d'électrode comportant au moins deux zones successives (A, B) à résistance progressive dans une direction axiale du conducteur (3, 4) et une seconde partie contiguë à la première comportant au moins deux zones ($B_1$, $A_1$) à résistance dégressive, les différentes zones des deux parties étant symétriques par rapport à une zone médiane (D).

7. Electrode selon l'une quelconque des revendications 1 à 6, caractérisée en ce que la zone (A) de moindre résistance est reliée à un adaptateur (7) de raccordement à l'écran (4) du conducteur réalisé en mélange conducteur.

8. Electrode selon l'une quelconque des revendications 1 à 7, caractérisée en ce que les zones successives (A-D) sont chargées en particules de carbure de silicium ayant une granulation comprise entre 3 $\mu$ et 2 380 $\mu$.

9. Electrode selon l'une quelconque des revendications 1 à 7, caractérisée en ce que les zones successives (A-D) sont chargées en particules d'oxyde de zinc ayant une granulation comprise entre 3 $\mu$ et 2 380 $\mu$.

10. Extrémité de jonction de câble, caractérisée en ce qu'elle est équipée d'au moins une électrode de réduction de contrainte (10, 10') selon l'une quelconque des revendications précédentes.


**Claims**

1. An electric stress relieving electrode for electric armored conductor junction ends, adapted to be placed around the periphery of the conductor insulator past the shield stop of armored conductor, and including at least one sheathing member formed of at least two adjacent successive regions (A-D) disposed in axial alignment with conductor (3, 4), wherein each region includes a plastic base mixture filled with non linear electrical resistance active product particulates, and wherein granulation of said particulates varies from one region to another.

2. An electric stress relieving electrode for electric armored conductor junction ends, adapted to be placed around the periphery of the conductor insulator past the shield stop of armored conductor, and including at least one sheathing member formed of at least two adjacent successive regions (A-D) disposed in axial alignment with conductor (3, 4), wherein each region includes a plastic base mixture filled with non linear electrical resistance active product particulates, the average granulation of said particles is substantially steady, and the concentration of said particulates varies from one region to another.

3. An electrode as recited in claim 1 or in claim 2, wherein said successive regions (A-D) transverse section is decreasing towards high tension parts of the junction end.

4. An electrode as recited in any claims 1-3, wherein an intermediate insulating medium (8, 8', 14) showing a higher relative permittivity ($\varepsilon$) than that of the conductor insulator (3) is interposed between the latter and the stress control electrode (10, 10').

5. An electrode as recited in any claims 1-4, including at least two sheathing members ($10_1$, $10_2$, $10_3$), each having a series of progressive resistance regions (A-D), which are radially spaced and separated by an insulating medium (80) having a higher relative permittivity ($\varepsilon$) than that of the conductor insulator (3).

6. An electrode as recited in claim 1 or in claim 2, including a first electrode portion comprising at least two successive regions (A, B) having a progressive resistance in the conductor (3, 4) axial direction and a second portion adjacent to the first one and including at least two degressive resistance regions ($B_1$, $A_1$), said both portion various regions being a mirror image with reference to a mid-region (D).

7. An electrode as recited in any claim 1-6, wherein said lower resistance region (A) is connected to a conductive mixture adaptor (7) adapted to connect said conductor to shield (4).

8. An electrode as recited in any claim 1-7, wherein said successive regions (A-D) are filled with silicon carbide particulates having a granulation from 3 $\mu$ to 2,380 $\mu$.

9. An electrode as recited in any claim 1-7, wherein said successive regions (A-D) are filled with zinc oxide particulates having a granulation from 3 $\mu$ to 2,380 $\mu$.

10. A cable junction end, including at least one electric stress relieving electrode (10, 10') as recited in any preceding claim.


**Ansprüche**

1. Elektrode zur Reduzierung elektrischer Beanspruchungen für Verbindungsenden abgeschirmter elektrischer Leiter, dazu bestimmt, entlang des Umfangs des Isolators des Leiters in Höhe des Endes der Abschirmung des abgeschirmten Leiters angeordnet zu werden, und wenigstens ein Hüllelement aufweisend, mit wenigstens zwei aufeinanderfolgenden, in Axialrichtung des Leiters (3, 4) aneinandergrenzenden Bereichen A-D, dadurch gekennzeichnet, daß jeder der Bereiche aus einem Gemisch eines Kunststoffs mit Teilchen von wirksamen Stoffen elektrisch nichtlinearen Widerstands besteht, und daß diese Teilchen in den einzelnen Bereichen unterschiedliche Granulation aufweisen.

2. Elektrode zur Reduzierung elektrischer Beanspruchungen für Verbindungsenden abgeschirmter elektrischer Leiter, dazu bestimmt, entlang des Umfangs des Isolators des Leiters in Höhe des Endes der Abschirmung des abgeschirmten Leiters angeordnet zu werden, und wenigstens ein Hüllelement aufweisend, mit wenigstens zwei aufeinanderfolgenden, in Axialrichtung des Leiters (3, 4) aneinandergrenzenden Bereichen A-D, dadurch gekennzeichnet, daß jeder der Bereiche aus einem Gemisch eines Kunststoffs mit Teilchen von wirksamen Stoffen elektrisch nichtlinearen Widerstands besteht, daß die Teilchen eine mittlere im wesentlichen konstante Granulation aufweisen und daß die Konzentration der Teilchen in den einzelnen Bereichen unterschiedlich ist.

3. Elektrode nach Anspruch 1 oder 2, dadurch gekennzeichnet, daß die aufeinanderfolgenden Bereiche A-D einen in Transversalrichtung in Richtung der Stellen unter Hochspannung des Verbindungsendes abnehmenden Querschnitt aufweisen.

4. Elektrode nach einem der Ansprüche 1 bis 3, dadurch gekennzeichnet, daß ein zusätzlicher isolierender Stoff (8, 8', 14) mit einer höheren relativen Dielektrizitätskonstanten ($\varepsilon$) als diejenige des Isolators (3) des Leiters zwischen diesem und der die Beanspruchung steuernden Elektrode (10, 10') angeordnet ist.

5. Elektrode nach einem der Ansprüche 1 bis 4, dadurch gekennzeichnet, daß sie wenigstens zwei Hüllelemente ($10_1$, $10_2$, $10_3$) aufweist, deren jedes eine Folge von Bereichen mit zunehmenden Widerständen A-D aufweist, die im radialen Abstand voneinander angeordnet sind, und von einem isolierenden Stoff (80) mit einer höheren relativen Dielektrizitätskonstanten ($\varepsilon$) als diejenige des Isolators (3) des Leiters voneinander getrennt sind.

6. Elektrode nach Anspruch 1 oder 2, dadurch gekennzeichnet, daß sie einen ersten Elektrodenteil aufweist, mit wenigstens zwei aufeinanderfolgenden Bereichen A, B mit in einer axialen Richtung des Leiters (3, 4) zunehmendem Widerstand und einen zweiten, an den ersten Teil angrenzenden Elektrodenteil aufweist, mit wenigstens zwei Bereichen $B_1$, $A_1$ abnehmenden Widerstands, wobei die einzelnen Bereiche der beiden Teile symmetrisch bezüglich eines mittleren Bereichs D sind.

7. Elektrode nach einem der Ansprüche 1 bis 6, dadurch gekennzeichnet, daß der Bereich A kleinsten Widerstands mit einem Adapter (7) zur Verbindung der Abschirmung (4) des Leiters aus leitendem Gemisch verbunden ist.

8. Elektrode nach einem der Ansprüche 1 bis 7, dadurch gekennzeichnet, daß die aufeinanderfolgenden Bereiche A-D mit Siliziumcarbid-Teilchen einer Granulation zwischen 3 $\mu$ und 2 380 $\mu$ versetzt sind.

9. Elektrode nach einem der Ansprüche 1 bis 7, dadurch gekennzeichnet, daß die aufeinanderfolgenden Bereiche A-D mit Zinkoxid-Teilchen einer Granulation zwischen 3 $\mu$ und 2 380 $\mu$ versetzt sind.

10. Kabelverbindungsende, dadurch gekennzeichnet, daß es mit wenigstens einer Elektrode (10, 10') zur Beanspruchungsreduzierung nach einem der vorhergehenden Ansprüche versehen ist.

Fig : 1

0 037 339

Fig : 2

Fig : 3

Fig : 6

2

Fig : 4

Fig : 5

Fig : 7

3

Fig: 9

Fig: 8

A₁

B₁

9

D

8

B

3

A

1

7

2'    11

15 %

30 %

70 %

85 %

4

7

6

10'

**Fig : 10**

**Fig : 12**

4

7

A₁

B₁

6

D

3

B

10'

A

9

8

12

7

2'

15

Fig : 11

Fig: 13